# EUROPEAN PATENT SPECIFICATION

(11) **EP 3 962 774 B1**
(45) Date of publication and mention of the grant of the patent: **19.11.2025**
(21) Application number: 20722499.9
(22) Date of filing: 20.04.2020
(51) Int. Cl.: B60N 2/24, B60N 2/01, B60N 2/42, B60N 2/427

(54) **SEAT ARRANGEMENT PROVIDED WITH A KNEE BOLSTER FOR A PUBLIC TRANSPORTATION VEHICLE**
MIT EINEM KNIEPOLSTER AUSGESTATTETE SITZANORDNUNG FÜR EIN ÖFFENTLICHES TRANSPORTFAHRZEUG
AGENCEMENT DE SIÈGE POURVU D'UN APPUIE-GENOUX POUR VÉHICULE DE TRANSPORT PUBLIC

(30) Priority: 29.04.2019 GB 201905948
(43) Date of publication of application: 09.03.2022
(73) Proprietor: ALSTOM Holdings, 93400 Saint-Ouen-sur-Seine (FR)
(72) Inventor: FULLELOVE, Ron, South Wingfield Alfreton Derbyshire DE55 7LZ (GB); GRIGGS, Paul, Ridgeway Ambergate Derbyshire DE56 2JL (GB); SHELDON, Steve, Breaston DE72 3AJ (GB)
(74) Representative: Alatis
(86) International application number: PCT/EP2020/060991
(87) International publication number: WO 2020/221614

(56) References cited:
- EP-A2- 0 494 657
- CN-A- 105 416 121
- DE-B- 1 024 815
- US-A- 3 827 752
- US-A- 3 877 749
- US-B2- 7 040 696

## Description

### TECNHICAL FIELD OF THE INVENTION

The present invention relates to a seat arrangement of a public transportation vehicle with a plurality of rows of seats.

### BACKGROUND ART

In a public transportation vehicle provided with several rows of seats, provisions are taken to ensure that in a front collision scenario, a passenger seating in the rear row will be safe from injury. Particular care has to be taken for the lower limbs, which are the part of the body closest to the front row of seats and are likely to hit the front row of seats.

When a seat in a rear row of one or more seats is aligned with the front seat, i.e. when the rear seat is not laterally offset relative to the front seat, the impact energy of the lower limb of a passenger seating in the rear row is easily absorbed by the seat back shell of the front seat. If further absorption is desired, the front seat may be provided with an individual knee pad facing the corresponding seat of the rear row of seats. Prior art document CN105416121 discloses a seat arrangement for a passenger car wherein a rear seat is aligned with a front seat. The back portion of the front seat is provided with an individual knee bolster to absorb the impact energy of the lower limb of a passenger seated in the rear row in case of a collision. Prior art document US 3 827 752 A discloses a protection unit for a bench-like seat of a school bus, i.e. a seat designed for two passengers, the school bus comprising a rear bench-like- seat aligned with a front bench-like- seat. A protection unit covers the back structure of the bench-type seat and provides a layer of energy absorbing material, so the impact energy of the lower limbs of the passengers seating in a rear seat is absorbed by the protection unit.

These solutions, however, are not a satisfactory when a rear seat or a rear row of seats is laterally offset relative to a front row of individualised seats because (a) there remains an unprotected space in front of one knee between two adjacent seats; (b) the lower limbs of the passenger in case of impact will not collide simultaneously with the front seat and (c) the lower limb strikes the seat structure / frame in a crash scenario.

### SUMMARY OF THE INVENTION

The invention aims to provide an improved lower limb protection to passenger seating in a rear row of one or more seats, laterally offset relative to a front row of several seats.

According to a first aspect of the invention, there is provided a seat arrangement in a public transportation vehicle, with a front row of at least two seats with individual backrests and a rear row of at least one seat laterally offset with respect to the front row of seats, characterised in that a back of the front row of seat is provided with a continuous knee bolster that extends laterally to cover a lower part of the backrests of the two seats of the front row.

The knee bolster is preferably provided with an energy absorbing structure, which extends laterally to cover a lower part of the backrests of the two seats of the front row.

The energy absorbing structure may comprise an elastically deformable structure, e.g. a set of one or more springs, and/or a plastically deformable structure, e.g. a plastically deformable foam or honeycomb structure.

Preferably, the knee bolster comprises a deformable cover, which covers the energy absorbing structure.

The rear row may include more than one seat, e.g. two seats.

According to another aspect of the invention, there is provided a public transportation vehicle, in particular a rail vehicle, a bus or an airplane, including the seat arrangement of any one of the preceding claims.

According to a non-limiting embodiment, the seats of the front row of seat have a width that is different from a width of the seats of the rear row of seats.

According to another non-limiting embodiment, a distance between the front row of seats and a vertical median plane of the public transportation vehicle is different from a distance between the rear row of seats and a vertical median plane of the public transportation vehicle.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- figure 1 is an isometric view of seat arrangement according to an embodiment of the invention;
- figure 2 is an isometric view, partly in section, of the seat arrangement of figure 1;
- figure 3 is a diagrammatic view of the seat arrangement of figure 1, from above.

The same reference signs will be used in the figures for identifying identical parts of the same embodiments or similar part in different embodiments.

### DETAILED DESCRIPTION OF PREFERRED EMBODIMENTS

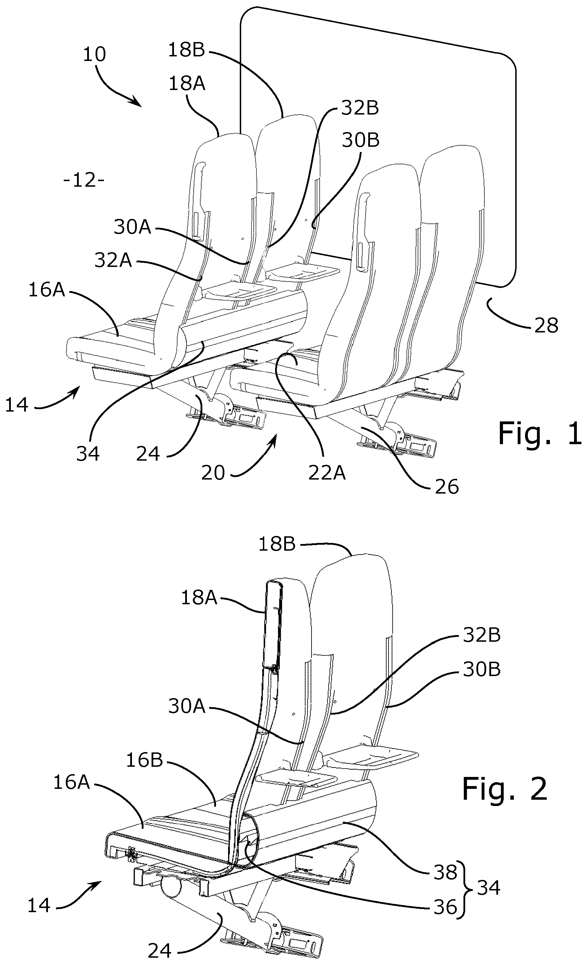

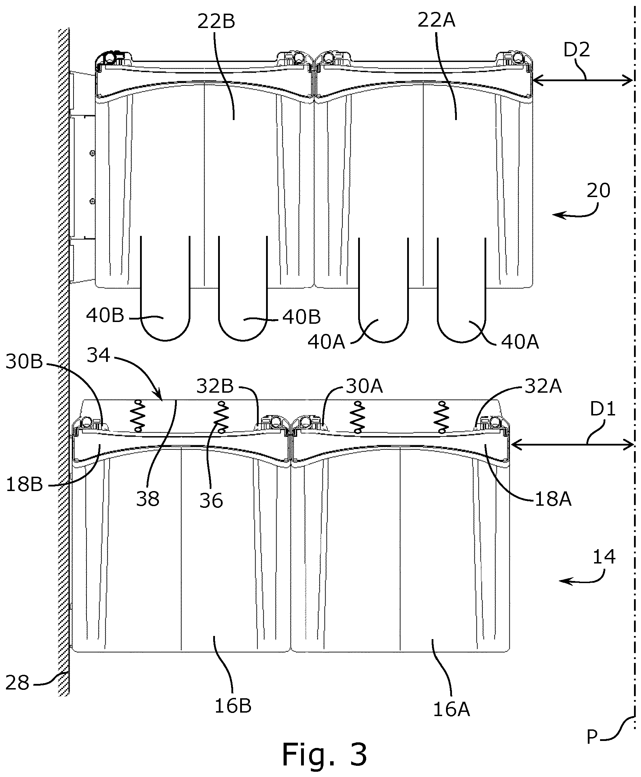

With reference to the Figures 1 to 3, a seat arrangement 10 in a public transportation vehicle 12, comprises a front row 14 of at least two seats 16A, 16B with individual backrests 18A, 18B and a rear row 20 of two seats 22A, 22B laterally offset with respect to the front row 14 of seats 16A, 16B (see figure 3). More specifically, a distance D1 between the front row 14 of seats 16A, 16B and a vertical median plane P of the public transportation vehicle is different from a distance D2 between the rear row 20 of seats 22A, 22B and the vertical median plane P of the public transportation vehicle 12.

Each row 14, 20 of seats is supported on a base 24, 26 fixed to a car body 28 of the public transportation vehicle. In this example, the bases 24, 26 are cantilevered and fixed to a side wall of the car body 28 to provide room below the seats for the comfort of passengers and/or for storing luggage. Alternatively, the base can be a pedestal fixed to the floor structure of the car body 28.

The seats 16A, 16B, 22A, 22B in each row 14, 20 may have a common seat structure or individualised seat structures. Their backrest structures are individualised to maximise comfort. In particular, each backrest structure comprises a set of at least two side pillars 30A, 32A, 30B, 32B, which may protrude towards the rear row of seats.

The backrest structures are fixed relative to the base, i.e. they cannot be individually adjusted. The upholstery of each seat can be fixed or movable relative to the seat and backrest structure.

The back of the front row 14 of seats 16A, 16B is provided with a continuous knee bolster 34 that extends laterally to entirely cover a lower part of the backrests 18A, 18B of the two seats 16A, 16B of the front row, including the lower part of the side pillars 30A, 32A, 30B, 32B. The knee bolster 34 is provided with an energy absorbing structure 36, which extends laterally to entirely cover the lower part of the backrests 18A, 18B of the two seats 16A, 16B of the front row 14.

The energy absorbing structure 36 is depicted as an elastically deformable structure made of a folded sheet of plastic or light metal. However, the energy absorbing structure 36 may comprise a plastically deformable structure or a combination of elastically and plastically deformable structures.

A deformable cover 38 covers the energy absorbing structure 36.

The knees 40A, 40B of two passengers seating on the rear row 20 of seats 22A, 22B have been illustrated in figure 3. As can be seen, the two knees 40A, 40B of each passenger are at equal distance from the knee bolster 30. In case of a frontal collision of the public passenger vehicle, the knees 40A, 40B of a given passenger will contact the knee bolster at the same time, which reduces the risk of injury, despite the uneven geometry of the back of the front row of seats. The stiffness of the knee bolster 30 is constant along the width of the knee polster 34, which ensures that the two knees of each passenger will be subjected to similar forces during the impact.

## Claims

1. A seat arrangement (10) in a public transportation vehicle, with a front row (14) of at least two seats (16A, 16B) with individual backrests (18A, 18B) and a rear row (20) of at least one seat (22A, 22B) laterally offset with respect to the at least two seats (16A, 16B) of the front row (14), the front and rear rows (14, 20) facing a common direction, **characterised in that** a back of the front row (14) is provided with a continuous knee bolster (34) that extends laterally to cover a lower part of the backrests (18A, 18B) of the two seats (16A, 16B) of the front row (14).

2. The seat arrangement (10) of claim 1, wherein the knee bolster (34) is provided with an energy absorbing structure (36), which extends laterally to cover a lower part of the backrests (18A, 18B) of the two seats (16A, 16B) of the front row (14).

3. The seat arrangement (10) of claim 2, wherein the energy absorbing structure (36) comprises an elastically deformable structure.

4. The seat arrangement of claim 2 or claim 3, wherein the energy absorbing structure (36) comprises a plastically deformable structure.

5. The seat arrangement of any one of claim 2 to 4, wherein the knee bolster (34) comprises a deformable cover (38), which covers the energy absorbing structure (36).

6. The seat arrangement of any one of the preceding claims, wherein the rear row (20) has at least two seats (22A, 22B).

7. A public transportation vehicle (12), in particular a rail vehicle, including the seat arrangement (10) of any one of the preceding claims.

8. The public transportation vehicle of claim 7, wherein the seats (16A, 16B) of the front row (14) have a width that is different from a width of at least one seat (22A, 22B) of the rear row (20).

9. The public transportation vehicle (12) of any one of claims 7 to 8, wherein a distance (D1) between the front row (14) and a vertical median plane (P) of the public transportation vehicle (12) is different from a distance (D2) between the rear row and the vertical median plane (P) of the public transportation vehicle (12).

## Patentansprüche

1. Sitzanordnung (10) in einem öffentlichen Transportfahrzeug, mit einer vorderen Reihe (14) aus mindestens zwei Sitzen (16A, 16B) mit einzelnen Rückenlehnen (18A, 18B) und einer hinteren Reihe (20) aus mindestens einem Sitz (22A, 22B), der seitlich versetzt in Bezug auf die mindestens zwei Sitze (16A, 16B) der vorderen Reihe (14) angeordnet ist, wobei die vordere und die hintere Reihe (14, 20) in eine gemeinsame Richtung weisen, **dadurch gekennzeichnet, dass** eine Rückseite der vorderen Reihe (14) mit einem durchgehenden Kniepolster (34) versehen ist, das sich seitlich erstreckt, um einen unteren Teil der Rückenlehnen (18A, 18B) der beiden Sitze (16A, 16B) der vorderen Reihe (14) abzudecken.

2. Sitzanordnung (10) nach Anspruch 1, wobei das Kniepolster (34) mit einer energieabsorbierenden Struktur (36) versehen ist, die sich seitlich erstreckt, um einen unteren Teil der Rückenlehnen (18A, 18B) der beiden Sitze (16A, 16B) der vorderen Reihe (14) abzudecken.

3. Sitzanordnung (10) nach Anspruch 2, wobei die energieabsorbierende Struktur (36) eine elastisch verformbare Struktur umfasst.

4. Sitzanordnung nach Anspruch 2 oder Anspruch 3, wobei die energieabsorbierende Struktur (36) eine plastisch verformbare Struktur umfasst.

5. Sitzanordnung nach einem der Ansprüche 2 bis 4, wobei das Kniepolster (34) eine verformbare Abdeckung (38) umfasst, die die energieabsorbierende Struktur (36) abdeckt.

6. Sitzanordnung nach einem der vorstehenden Ansprüche, wobei die hintere Reihe (20) mindestens zwei Sitze (22A, 22B) aufweist.

7. Öffentliches Transportfahrzeug (12), insbesondere ein Schienenfahrzeug, einschließlich der Sitzanordnung (10) nach einem der vorstehenden Ansprüche.

8. Öffentliches Transportfahrzeug nach Anspruch 7, wobei die Sitze (16A, 16B) der vorderen Reihe (14) eine Breite aufweisen, die sich von der Breite mindestens eines Sitzes (22A, 22B) der hinteren Reihe (20) unterscheidet.

9. Öffentliches Transportfahrzeug (12) nach einem der Ansprüche 7 bis 8, wobei ein Abstand (D1) zwischen der vorderen Reihe (14) und einer vertikalen Mittelebene (P) des öffentlichen Transportfahrzeugs (12) sich von einem Abstand (D2) zwischen der hinteren Reihe und der vertikalen Mittelebene (P) des öffentlichen Transportfahrzeugs (12) unterscheidet.

## Revendications

1. Agencement de sièges (10) dans un véhicule de transport public, avec une rangée avant (14) d'au moins deux sièges (16A, 16B) avec des dossiers individuels (18A, 18B) et une rangée arrière (20) d'au moins un siège (22A, 22B) décalé latéralement par rapport aux au moins deux sièges (16A, 16B) de la rangée avant (14), les rangées avant et arrière (14, 20) étant orientées dans une direction commune, **caractérisé en ce qu'**un dos de la rangée avant (14) est pourvu d'un appuie-genoux continu (34) qui s'étend latéralement pour couvrir une partie inférieure des dossiers (18A, 18B) des deux sièges (16A, 16B) de la rangée avant (14).

2. Agencement de sièges (10) selon la revendication 1, dans lequel l'appuie-genoux (34) est pourvu d'une structure d'absorption d'énergie (36) qui s'étend latéralement pour couvrir une partie inférieure des dossiers (18A, 18B) des deux sièges (16A, 16B) de la rangée avant (14).

3. Agencement de sièges (10) selon la revendication 2, dans lequel la structure d'absorption d'énergie (36) comprend une structure élastiquement déformable.

4. Agencement de sièges selon la revendication 2 ou la revendication 3, dans lequel la structure d'absorption d'énergie (36) comprend une structure plastiquement déformable.

5. Agencement de sièges selon l'une quelconque des revendications 2 à 4, dans lequel l'appuie-genoux (34) comprend un couvercle déformable (38) qui recouvre la structure d'absorption d'énergie (36).

6. Agencement de sièges selon l'une quelconque des revendications précédentes, dans lequel la rangée arrière (20) présente au moins deux sièges (22A, 22B).

7. Véhicule de transport public (12), en particulier un véhicule ferroviaire, comportant l'agencement de sièges (10) selon l'une quelconque des revendications précédentes.

8. Véhicule de transport public selon la revendication 7, dans lequel les sièges (16A, 16B) de la rangée avant (14) ont une largeur différente d'une largeur d'au moins un siège (22A, 22B) de la rangée arrière (20).

9. Véhicule de transport public (12) selon l'une quelconque des revendications 7 à 8, dans lequel une distance (D1) entre la rangée avant (14) et un plan vertical médian (P) du véhicule de transport public (12) est différente d'une distance (D2) entre la rangée arrière et le plan vertical médian (P) du véhicule de transport public (12).
